(19) Europäisches Patentamt
European Patent Office
Office européen des brevets

(11) EP 0 396 958 B1

# (12) EUROPÄISCHE PATENTSCHRIFT

(45) Veröffentlichungstag und Bekanntmachung des Hinweises auf die Patenterteilung:
**11.12.1996 Patentblatt 1996/50**

(51) Int Cl.[6]: **C08L 69/00**, C08L 51/04
// (C08L69/00, 51:04, 101:00),
(C08L51/04, 69:00, 101:00)

(21) Anmeldenummer: **90107756.0**

(22) Anmeldetag: **24.04.1990**

(54) **Verfahren zur Herstellung von Polycarbonat-Formmassen**

Process for preparing polycarbonate moulding compositions

Procédé pour préparer des masses à mouler de polycarbonate

(84) Benannte Vertragsstaaten:
**DE ES FR GB IT NL**

(30) Priorität: **06.05.1989 DE 3914946**

(43) Veröffentlichungstag der Anmeldung:
**14.11.1990 Patentblatt 1990/46**

(73) Patentinhaber: **BAYER AG**
**51368 Leverkusen (DE)**

(72) Erfinder:
- **Eckel, Thomas, Dr.**
  **D-4047 Dormagen 1 (DE)**
- **Wittmann, Dieter, Dr.**
  **D-5000 Köln 80 (DE)**
- **Lindner, Christian, Dr.**
  **D-5000 Köln 91 (DE)**
- **Westeppe, Uwe, Dr.**
  **D-4020 Mettmann (DE)**

(56) Entgegenhaltungen:
**EP-A- 0 303 075** **EP-A- 0 315 868**
**EP-A- 0 362 646** **US-A- 3 398 212**
**US-A- 4 469 833**

Bemerkungen:
Die Akte enthält technische Angaben, die nach dem Eingang der Anmeldung eingereicht wurden und die nicht in dieser Patentschrift enthalten sind.

EP 0 396 958 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

1. Gegenstand der Erfindung ist ein Verfahren zur Herstellung von thermoplastischen Formmassen wobei man ein Pfropfpolymerisat B aus

B.1 5 bis 90 Gew.-Teilen einer Mischung aus

B.1.1 50 bis 98 Gew.-Teilen Styrol. α-Methylstyrol $C_1$-$C_4$-Alkyl- oder Halogen-kernsubstituierten Styrolen, $C_1$-$C_8$-Alkylmethacrylaten, $C_1$-$C_8$-Alkylacrylaten oder Mischungen daraus und

B.1.2 5 bis 50 Gew.-Teilen Acrylnitril, Methacrylnitril $C_1$-$C_8$-Alkylmethacrylaten; $C_1$-$C_8$-Alkylacrylaten, Maleinsäureanhydrid, $C_1$-$C_4$-Alkyl-N-Maleinimiden, Phenyl-N-Maleinimiden oder Mischungen daraus, auf

B.2 10 bis 95 Gew.-Teilen eines Dienkautschuks mit einem mittleren Teilchendurchmesser $d_{50}$ von 0.09 bis 1 um und einem Gelgehalt von mehr als 50 Gew.-%, mittels eines Initiatorsystems aus Cumolhydroperoxid oder tert.-Butylhydroperoxid und Ascorbinsäure herstellt und anschließend

2 bis 60 Gew.-% Pfropfpolymerisat B mit

A. 40 bis 98 Gew.-% (bezogen auf A + B) eines Polycarbonats; das die bifunktionelle Struktureinheit der Formel (I) enthält,

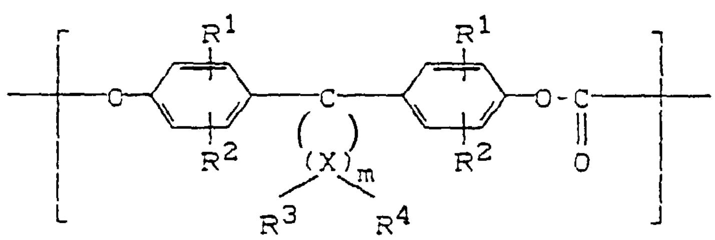

(I)

worin

$R^1$ und $R^2$ unabhängig voneinander Wasserstoff, Halogen, bevorzugt Chlor oder Brom; $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes X individuell wahlbar. unabhängig voneinander Wasserstoff oder $C_1$-$C_6$-Alkyl

und

X Kohlenstoff bedeuten.
mit der Maßgabe, daß an mindestens einem Atom X $R^3$ und $R^4$ gleichzeitig Alkyl bedeuten, und

C. gegebenenfalls mindestens einem weiterem thermoplastischen Harz; welches bis zu 75 Gew.-%. des Polycarbonats A ersetzt. vermischt.

Die Formmassen weisen neben hoher Wärmeformbeständigkeit gute Kerbschlagzähigkeit und erheblich verbessertes Spannungsrißverhalten auf.

Polycarbonate A

Polycarbonate A sind hochmolekulare, thermoplastische, aromatische Polycarbonate mit Molekulargewichten $\overline{M}_w$ (Gewichtsmittel) von mindestens 10.000, vorzugsweise von 20.000 bis 300.000, die bifunktionelle Struktureinheiten der Formel (I) enthalten,

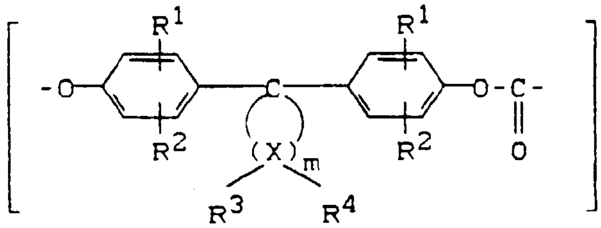 (I)

worin

- $R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,
- m eine ganze Zahl von 4 bis 7, bevorzugt 4 oder 5,
- $R^3$ und $R^4$ für jedes X individuell wählbar, unabhängig voneinander Wasserstoff oder $C_1$-$C_6$-Alkyl

und

X Kohlenstoff bedeuten,
mit der Maßgabe, daß an mindestens einem Atom X $R^3$ und $R^4$ gleichzeitig Alkyl bedeuten.

Ausgangsprodukte für die Polycarbonate A sind Dihydroxydiphenylcycloalkane der Formel (II)

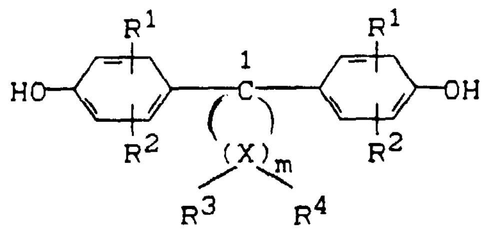 (II)

worin
X, $R^1$, $R^2$, $R^3$, $R^4$ und m für die Formel (I) genannte Bedeutung haben.

Bevorzugt sind an 1 - 2 Atomen X, insbesondere nur an einem Atom X, $R^3$ und $R^4$ gleichzeitig Alkyl. Bevorzugter Alkylrest ist Methyl; die X-Atome in α-Stellung zu dem di-phenyl-substituierten C-Atom (C-1) sind bevorzugt nicht dialkylsubstituiert, dagegen ist die Alkyldisustitution in β-Stellung zu C-1 bevorzugt.

Bevorzugt sind Dihydroxydiphenylcycloalkane mit 5 und 6 Ring-C-Atomen im cycloaliphatischen Rest (m = 4 oder 5 in Formel (II), beispielsweise die Diphenole der Formeln (IIa-IIC),

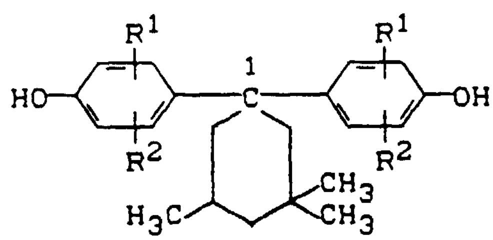 (IIa)

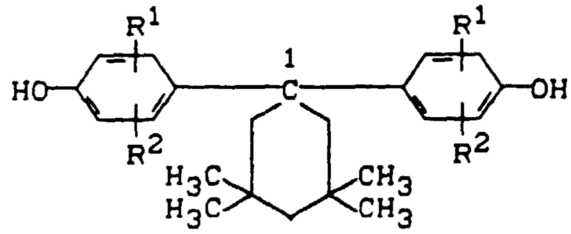

(IIb)

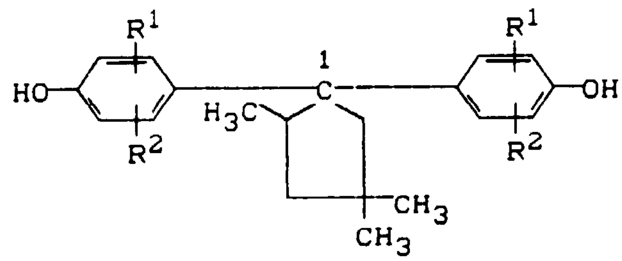

(IIc)

wobei das 1,1-Bis-(4-hydroxyphenyl)-3,3,5-trimethylcyclohexan (Formel IIa mit $R^1$ und $R^2$ gleich H) besonders bevorzugt ist.

Die Polycarbonate A und die Dihydroxydiphenylcycloalkane der Formel (II) und die Herstellung beider sind in der Deutschen Offenlegungsschrift 3 832 396 beschrieben.

Es können sowohl ein Diphenol der Formel (II) unter Bildung von Homopolycarbonaten als auch mehrere Diphenole der Formel (II) unter Bildung von Copolycarbonaten verwendet werden.

Außerdem können die Diphenole der Formel (II) auch im Gemisch mit anderen Diphenolen, beispielsweise mit denen der Formel (III)

$$HO\text{-}Z\text{-}OH \qquad (III)$$

zur Herstellung von Polycarbonaten A verwendet werden.

In Formel (III) bedeutet Z einen zweiwertigen, ein- oder mehrkernigen aromatischen Rest mit 6 - 30 C-Atomen; die beiden OH-Gruppen sind direkt an C-Atome eines aromatischen Ringes gebunden.

Besonders bevorzugte Diphenole entsprechen der Formel (X)

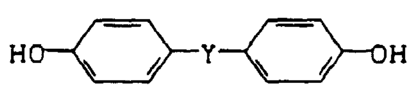

(X)

in der Y eine Einfachbindung, einen Alkylen- oder Alkylidenrest mit 1 - 7 C-Atomen, einen Cycloalkylen- oder Cycloalkylidenrest mit 5 - 12 C-Atomen, -O-, -S-,

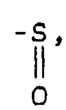

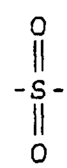

oder

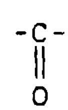

bedeutet,

Ebenfalls bevorzugt sind kernalkylierte und kernhalogenierte Derivate und Diphenole entsprechend Formel (X).

Beispiele für Diphenole der Formel (III) sind Hydrochinon,

Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis-(hydroxyphenyl)-diisopropylbenzole sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 0956, der französischen Patentschrift 1 561 518 und in der Monographie "H. Schnell, Chemistry and Plastics of Polycarbonates, Interscience Publishers, New York 1964", beschrieben.

Bevorzugte andere Diphenole sind beispielsweise:

4,4′-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α′-Bis-(3,5-dimethyl-4-hydroxyphenyl)-p-diisopropylbenzol, 2,2-Bis-(3,5-dichlor-4-hydroxyphenyl)-propan,
und 2,2-Bis-(3,5-dibrom-4-hydroxyphenyl)-propan.

Besonders bevorzugte Diphenole der Formel (III) sind beispielsweise:

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und 1,1-Bis-(4-hydroxyphenyl)-cyclohexan.

Insbesondere ist 2,2-(4-hydroxyphenyl)-propan bevorzugt.

Die anderen Diphenole können sowohl einzeln als auch im Gemisch eingesetzt werdend.

Das Mol-Verhältnis von Diphenolen der Formel (II) zu den gegebenenfalls mitzuverwendenden anderen Diphenolen der Formel (III), ist 100:0 bis 2:98, bevorzugt 100:0 bis 5:95, besonders 100:0 bis 10:90 und speziell 100:0 bis 20:80.

Die verschiedenen Diphenole können in den Polycarbonaten A statistisch oder blockweise angeordnet sein.

Die Polycarbonate können in an sich bekannter Weise verzweigt sein. Wenn Verzweigung gewünscht wird, kann sie in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen erreicht werden. Einige Verzweiger mit drei oder mehr als drei phenolischen Hydroxylgruppen sind:

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)benzol,
1,1,1-Tri-(4-hydroxyphenyl)-ethan,
Tri-(-4-hydroxyphenyl)-phenylmethan
2,2-Bis-(4,4-bis-(4-hydroxypehnyl)-cyclohexyl)-propan,
2,2-Bis-(4-hydroxyphenyl-isopropyl)-phenol,

2,6-Bis-(2-hydroxy-5-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-(4′-,4″-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate A dienen monofunktionelle Verbindungen in üblichen Konzentrationen Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (IV), geeignet,

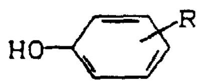

(IV)

worin R einen verzweigten $C_8$- und/oder $C_9$-Alkylrest darstellt. Bevorzugt ist im Alkylrest R der Anteil an Wasserstoffatomen in $CH_3$-Gruppen 47 bis 89 % und der Anteil an Wasserstoffatomen in CH- und $CH_2$-Gruppen 53 bis 11 %; bevorzugt ist R in o- und p-Stellung zur OH-Gruppe, besonders bevorzugt der Anteil an o-ständigem R höchstens 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate A können vorzugsweise durch Phasengrenzflächenpolykondensation (vgl. H. Schnell, "Chemistry and Physics of Polycarbonates", Polymer Reviews, Vol IX, Seite 33 ff., Interscience Publ., 1964) in an sich bekannter Weise hergestellt werden. Hierbei werden die Diphenole der Formel (II) in wäßrig alkalischer Phase gelöst. Zur Herstellung von Copolycarbonaten mit anderen Diphenolen werden Gemische von Diphenolen der Formel (II) und den anderen Diphenolen, beispielsweise denen der Formel (III), eingesetzt. Zur Regulierung des Molekulargewichts können Kettenabbrecher z.B. der Formel (IV) zugegeben werden, Dann wird in Gegenwart einer inerten, vorzugsweise Polycarbonat lösenden, organischen Phase mit Phosgen nach der Methode der Phasengrenzflachenkondensation umgesetzt. Die Reaktionstemperatur ist 0°C bis 40°C.

Die gegebenenfalls mitverwendeten Verzweiger (bevorzugt 0,05 bis 2,0 Mol-%) können entweder mit den Diphenolen in der wäßrig alkalischen Phase vorgelegt werden oder in dem organischen Lösungsmittel gelöst vor der Phosgenierung zugegeben werden.

Neben den Diphenolen der Formel (II) und gegebenenfalls anderen Diphenolen (III) können auch deren Mono und/oder Bis-chlor-kohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (II) und gegebenenfalls Formel (III); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzeiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate A durch Phasengrenzflächenpolykondensation kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol.-%, bezogen auf Mole Diphenole eingesetzt werden. Die Katalysatoren können vor Beginn der Phosgenierung oder während oder auch nach der Phosgenierung zugesetzt werden.

Die Polycarbonate A können auch in homogener Phase, nach dem sogenannten "Pyridinverfahren" sowie durch bekannte Schmelzumesterung unter Verwendung von beispielsweise Diphenylcarbonat anstelle von Phosgen hergestellt werden.

Die Polycarbonate A haben bevorzugt Molekulargewichte $\overline{M}_w$(Gewichtsmittel, ermittelt durch Gelchromatographie nach vorheriger Eichung) von mindestens 10.000, besonders bevorzugt von 20.000 bis 300.000 und insbesondere von 20.000 bsi 80.000. Sie können linear oder verzweigt sein, sie sind Homopolycarbonate oder Copolycarbonate auf

Basis der Diphenole der Formel (II).

Durch den Einbau der Diphenole der Formel (II) entstehen Polycarbonate mit hoher Wärmeformbeständigkeit, die auch sonst ein gutes Eigenschaftsbild haben. Dies gilt insbesondere für die Polycarbonate auf Basis der Diphenole der Formel (II), in denen m = 4 oder 5 ist, und ganz besonders für die Polycarbonate auf Basis der Diphenole (IIa), worin $R^1$ und $R^2$ unabhängig voneinander die für Formel (II) genannte Bedeutung haben und besonders bevorzugt Wasserstoff sind.

Die besonders bevorzugten Polycarbonate A sind also solche, in deren Struktureinheiten der Formel (I) m = 4 oder 5 und ganz besonders solche aus Einheiten der Formel (V),

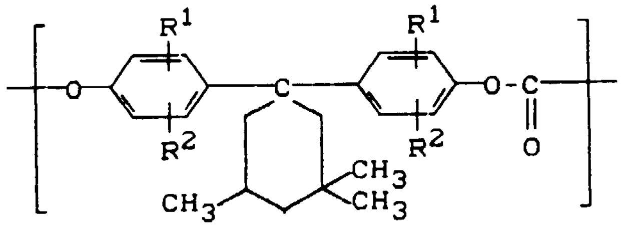 (V)

worin

$R^1$ und $R^2$ die für die Formel (I) genannte Bedeutung haben, besonders bevorzugt aber Wasserstoff sind.

Diese Polycarbonate, besonders die auf Basis der Diphenole der Formel (IIa), worin insbesondere $R^1$ und $R^2$ Wasserstoff sind, besitzen außer hoher Wärmeformbeständigkeit gute UV-Stabilität und gutes Fließverhalten in der Schmelze, was nicht zu erwarten war.

Durch Kombination mit anderen Diphenolen, insbesondere mit denen der Formel (III) lassen sich zudem die Eigenschaften der Polycarbonate abwandeln.

Pfropfpolymerisate B

Die Herstellung der Pfropfpolymerisate B erfolgt nach einem speziellen Verfahren gemäß DE-OS 3 708 913. Dort wird beschrieben, daß man Pfropfpolymerisate harzbildender Monomerer auf Kautschuke mit hoher Pfropfausbeute herstellen kann (so daß sie überraschend wenig freies Polymerisat der Pfropfmonomeren enthalten), wenn man in Emulsion mit einem speziellen Initiatorsystem aus einem organischen Hydroperoxid und Ascorbinsäure polymerisiert.

Bevorzugt polymerisiert man die Monomeren (B.1) in wäßriger Emulsion in Gegenwart einer Emulsion des Kautschuks (B.2) bei 40 bis 70°C, insbesondere 50 bis 70°C mit einem Initiatorsystem aus 0,3 bis 1,5 Gewichtsteilen organischem Hydroperoxid (I) und 0,1 bis 1 Gewichtsteilen Ascorbinsäure (II) pro 100 Gewichtsteilen Pfropfmonomere, wobei das Gewichtsverhältnis (I) : (II) 0,3 bis 15, insbesondere 1 bis 10, vorzugsweise 3 bis 8 ist.

Bevorzugte Dienkautschuke sind Homopolymerisate von Butadien, Isopren, Chloropren und Copolymerisate dieser Monomeren mit bis zu 40 Gew.-% anderer Monomeren wie Acrylnitril, Styrol, Alkylacrylat, Alkylmethacrylat sowie gegebenenfalls geringeren Mengen polyfunktioneller Vinylmonomer wie Divinylbenzol und Ethylenglykol-Bis-acrylat.

Die Kautschuke sind wenigstens partiell vernetzt und besitzen Gelgehalte von größer 50 Gew.-%, insbesondere von 73 bis 98 Gew.-%, und sind teilchenförmig mit mittleren Teilchendurchmessern ($d_{50}$-Werte) von 0,09 bis 1,0 µm, insbesondere 0,09 bis 0,6 µm. Solche teilchenförmigen Kautschuke sind bekannt. Sie werden durch Emulsionspolymerisation hergestellt und liegen meist als Latices vor.

Die verwendeten Pfropfpolymerisate B sind solche, die man durch Pfropfpolymerisation von 5 bis 90 Gew.-Teilen, vorzugsweise 20 bis 80 Gew.-Teilen eines Vinylmonomeren oder eines Vinylmonomerengemisches (B.1) auf 10 bis 95 Gew.-Teilen, vorzugsweise 20 bis 80 Gew.-Teilen Dienkautschuk (B.2) erhält.

Besonders bevorzugtes Vinylmonomer ist Methylmethacrylat. Bevorzugte Vinylmonomerenmischungen bestehen aus 50 bis 95 Gew.-Teilen Styrol, α-Methylstyrol (oder anderen Alkyl- oder halogenkernsubstituierten Styrolen) oder Methylmethacrylat einerseits und 5 bis 50 Gew.-Teilen Acrylnitril, Methacrylnitril, $C_1$-$C_8$-Alkylacrylaten, $C_1$-$C_8$-Alkylmethacrylaten, Maleinsäureanhydrid oder N-substituierten Maleinimiden andererseits.

Bevorzugte Alkylacrylate und Alkylmethacrylate sind Butylacrylat und Methylmethacrylat.

Bevorzugte Monomere zum Aufbau der Pfropfhülle bestehen aus Styrol/Acrylnitril-Gemischen -Gemischen (Gewichts-Verhältnis 72:28) und aus Styrol/Maleinsäureanhydridgemischen (Gewichts-Verhältnis 94 bis 87 : 6 bis 13).

Besonders bevorzugte Monomeren-Kombinationen zum Aufbau der Pfropfhüllen sind 30 bis 40 Gew.-Teile α-Methylstyrol, 52 bis 62 Gew.-Teile Methylmethacrylat und 4 bis 14 Gew.-Teile Acrylnitril.

Die Pfropfpolymerisate B werden in wäßriger Emulsion durch Polymerisation der Monomeren auf einen in wäßriger Emulsion vorliegenden Kautschuk hergestellt. Dabei werden üblicherweise oberflächenaktive Hilfsmittel eingesetzt

wie Emulgatoren oder Dispergatoren sowie gegebenenfalls Zusätze, um bestimmte pH-Werte und Elektrolytgehalte bei der Pfropfpolymerisation einzustellen. Man kann die Emulsions-Pfropfpolymerisation auch ohne Emulgator durchführen, z.B., wenn man mit im Vergleich zur Kautschukmenge kleine Monomermengen arbeitet, oder wenn die in der Kautschukemulsion (Latex) enthaltenen Emulgatoren bereits ausreichen, um die Stabilität der Emulsion bei der Pfropfpolymerisation der Monomeren zu gewährleisten.

Besonders geeignet sind anionische Emulgatoren, vorzugsweise Alkali-Salze von Fettsäuren und von Arylsulfonsäuren. Sie werden in Mengen bis zu 5 Gew.-%, vorzugsweise bis zu 2,5 Gew.-%, bezogen auf die zu polymerisierenden Monomeren, eingesetzt.

Geeignete Hydroperoxide sind beispielsweise Cumolhydroperoxid, tert.-Butylhydroperoxid, Wasserstoffperoxid, vorzugsweise Cumolhydroperoxid und tert.-Butylhydroperoxid, also Hydroperoxide mit großen Halbwertzeiten.

Nach DE-OS 3 708 913 kann man beispielsweise wie folgt polymerisieren:

Bei Polymerisationstemperaturen von 40 bis 70°C, insbesonders 50 bis 70°C, wird die wäßrige Emulsion eines partiell vernetzten Dienkautschuks mit den Pfropfmonomeren und gegebenenfalls Emulgator sowie mit Hydroperoxid und Ascorbinsäure (als Lösungen) versetzt. Als weitere Komponente des Initiatorsystems können geringe Mengen Schwermetallkationen, insbesondere Eisenionen, zugefügt werden, inbesondere wenn die Kautschukemulsionen schon größere Mengen Komplexierungsmittel enthalten. Normalerweise wird das Arbeiten ohne Eisenionen bevorzugt; die Pfropfpolymerisate sind dann schwermetallfrei Das Verfahren verwendet wäßrige Lösungen von Ascorbinsäure und Lösungen von Hydroperoxid; nicht genügend wasserlösliche Hydroperoxide wie Cumolhydroperoxid, werden in Form wäßriger Emulsionen (vorteilhaft mit dem gleichen Emulgator wie in der Pfropfpolymerisation) eingesetzt.

Das Hydroperoxid und die Ascorbinsäure können während der Pfropfpolymerisation portionsweise oder kontinuierlich zugegeben werden. Bevorzugt wird ein Teil des Hydroperoxids mit dem zu bepfropfenden Kautschuk vorgelegt; die Pfropfmonomeren, die Ascorbinsäure, der Rest Hydroperoxid und gegebenenfalls Emulgator werden mit fortschreitender Polymerisation separat zugegeben.

Die Mengen Hydroperoxid und Ascorbinsäure sind kritisch. Bei einer Überdosis von Hydroperoxid, Ascorbinsäure oder beiden geht die Pfropfausbeute zurück, das Molekulargewicht des gebildeten Polymerisats wird geringer. Unter- oder Überschreitung der Mengen an Hydroperoxid und Ascorbinsäure kann sich außerdem empfindlich auf Monomerumsatz und Emulsionsstabilität auswirken. Bei der Pfropfpolymerisation sind Temperaturen von 40 bis 70°C unbedingt einzuhalten.

Die Pfropfpolymerisation kann bis zu Monomerumsätzen von größer 90 Gew.-%, insbesondere größer 98 Gew.-% geführt werden und liefert lagerstabile Pfropfpolymeremulsionen mit Polymerisatgehalten von 25 bis 50 Gew.-%. Das Pfropfpolymerisat läßt sich daraus gut durch bekannte Koagulations-Verfahren (z.B. mit Säuren oder Salzen) isolieren.

Will man die Pfropfpolymerisate mit thermoplastischen Harzen kombinieren, die selbst als Emulsion vorliegen, so kann man die Pfropfpolymerisatemulsion mit der Harzemulsion mischen und gemeinsam koagulieren.

<u>Thermoplastisches Harz C</u>

Als thermoplastische Harze C kommen hauptsächlich in Frage:

C.1 Vinylcopolymerisate
C.2 Polyalkylenterephthalate
C.3 aromatische Polycarbonate (außer den Polycarbonaten A)
C.4 aromatische Polyestercarbonate
C.5 aromatische Polyethersulfone

Diese thermoplastischen Harze können bis zu 75 Gew.-%, vorzugsweise bis zu 50 Gew.-% des Polycarbonats A ersetzen.

Erfindungsgemäß einsetzbar sind Vinyl-Copolymerisate C.1 aus 50-98 Gew.-%, bevorzugt 60-95 Gew.-% Methylmethacrylat, Styrol, α-Methylstyrol, kernsubstituiertem Styrol oder Mischungen daraus einerseits und 50 bis 2 Gew-%, bevorzugt 40-5 Gew.-% Acrylnitril, Methacrylnitril, Methylmethacrylat, Maleinsäureanhydrid, N-substituiertem Maleinimid oder Mischungen daraus andererseits.

Thermoplastische Copolymerisate entsprechend C.1 können bei der Herstellung der Pfropfpolymerisate B als Nebenprodukte entstehen, besonders, wenn große Mengen Monomere auf kleine Mengen Kautschuk pfropfpolymerisiert werden. In der gegebenenfalls zugefügten Menge Copolymerisat C.1 ist das Nebenprodukt der Pfropfpolymerisation nicht eingeschlossen.

Die Vinyl-Copolymerisate C.1 sind harzartig, thermoplastisch und kautschukfrei.

Besonders bevorzugte thermoplastische Harze C.1 sind Copolymerisate aus Styrol, Acrylnitril und gegebenenfalls Methylmethacrylat; aus α-Methylstyrol, Acrylnitril und gegebenenfalls Methylmethacrylat; aus Styrol, α-Methylstyrol,

Acrylnitril und gegebenenfalls Methylmethacrylat.

Die Styrol-Acrylnitril-Copolymerisate C.1 sind bekannt und können durch radikalische Emulsions-, Suspensions-, Lösungs- oder Massepolymerisation hergestellt werden. Die Copolymerisate C.1 besitzen vorzugsweise Molekulargewichte $\overline{M}_w$ (Gewichtsmittel, ermittelt durch Lichtstreuung oder Sedimentation) von 15.000 bis 200.000.

Besonders bevorzugte Copolymerisate C.1 sind statistisch aufgebaute Copolymerisate aus Styrol und Maleinsäureanhydrid, die durch kontinuierliche Masse- oder Lösungspolymerisation bei unvollständigen Umsätzen aus den entsprechenden Monomeren hergestellt worden sind; ihr bevorzugter Gehalt an polymerisiertem Maleinsäureanhydrid ist 5 bis 25 Gew.-%, ihr Molekulargewicht (Zahlenmittel $M_n$), bevorzugt 60.000 bis 200.000, ihre Grenzviskosität (η) bevorzugt 0,3 bis 0,9 (gemessen in Dimethylformamid bei 25°C; siehe hierzu Hoffmann, Krömer, Kuhn, Polymeranalytik I, Stuttgart 1977, Seite 316 ff.).

Anstelle von Styrol können die Vinylcopolymerisate C.1 auch kernsubstituierte Styrole, wie p-Methylstyrol, Vinyltoluol, 2,4-Dimethylstyrol und andere substituierte Styrole, wie α-Methylstyrol, einpolymerisiert enthalten.

Polyalkylenterephthalate C.2 sind Reaktionsprodukte von Terephthalsäure und gegebenenfalls anderen Dicarbonsäuren) (oder ihren reaktionsfähigen Derivaten, z.B. Dimethylestern oder Anhydriden) und aliphatischen, cycloaliphatischen oder arylaliphatischen Diolen, bevorzugt aliphatischen und cycloaliphatischen Diolen mit 2 bis 10 C-Atomen (Kunststoff-Handbuch, Band VIII, S. 695 ff, Carl Hanser Verlag,, München 1973).

Bevorzugte Polyalkylenterephthalate C.2 enthalten 80 bis 100 Mol-%; vorzugsweise 90 bis 100-Mol.-%, bezogen auf Dicarbonsäure, Terephthalsäurereste und 80 bis 100-Mol-%, vorzugsweise 90 bis 100 Mol-%, bezogen auf Diole, Ethandiol und/oder Butandiol-1,4-Reste Neben Terephthalsäureresten können 0 bis 20 Mol-% Reste anderer aromatischer Dicarbonsäuren mit 8 bis 14-C-Atomen oder aliphatischer Dicarbonsäuren mit 4 bis 12 C-Atomen enthalten sein, z.B. Reste von Phthalsäure, Isophthalsäure, Naphthalin-2,6-dicarbonsäure, 4,4′-Diphenyldicarbonsäure, Bernstein-, Adipin-, Sebacin-, Azelain- oder Cyclohexandiessigsäure. Neben Ethandiol und/oder Butandiol-1,4-Resten können 0 bis 20 Mol-% Reste anderer aliphatischer Diole mit 3 bis 12 C-Atomen oder cycloaliphatischer Diole mit 6 bis 12 C-Atomen enthalten sein, z.B. Reste von Pentandiol-1,5, Hexandiol-1,6, Cyclohexandimethanol-1,4, 3-Methylpentandiol-1,3 und 1,6, 2-Ethylhexandiol-1,3, 2,2-Diethylpropandiol-1,3, Hexandiol-2,5, 1,4-Di(β-hydroxyethoxyphenyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan vgl. DE-OS 2 407 647; 2 407 776; 2 715 932).

Die Polyalkylenterephthalate C.2 können durch Einbau kleiner Mengen 3- oder 4-wertiger Alkohole oder 3- oder 4-basiger Carbonsäuren verzweigt werden (vgl. DE-OS 1 900 270 und US-PS 3 692 744). Beispiele für Verzweigungsmittel sind Trimesinsäure, Trimellithsäure, Trimethylolethan und -propan und Pentaerythrit. Es ist ratsam, nicht mehr als 1 Mol-% des Verzweigungsmittel (bezogen auf Dicarbonsäuren) zu verwenden.

Besonders bevorzugt sind Polyalkylenterephthalate C.2, die allein aus Terephthalsäure (oder deren reaktionsfähigen Derivaten, z.B. deren Dialkylestern) und Ethanol und/oder Butandiol-1,4 hergestellt worden sind sowie deren Mischungen.

Bevorzugte Polyalkylenterephthalate C.2 sind auch Copolyester, die aus mindestens zwei der obengenannten Diole hergestellt sind; besonders bevorzugte Copolyester sind Poly-(ethandiol/butandiol-1,4)-terephthalate. In den Copolyestern können die Reste der verschiedenden Diolreste in Blockanordnung oder statistisch verteilt vorliegen.

Die Polyalkylenterephthalate C.2 besitzen im allgemeinen eine Intrinsic-Viskosität von 0,4 bis 1,5 dl/g, vorzugsweise 0,5 bis 1,3 dl/g, insbesondere 0,6 bis 1,2 dl/g (gemessen in einem Phenol/o-Dichlorbenzol-Gemisch (Gewichtsverhältnis 1:1) bei 25°C und einer Konzentration von 0,5 g/dl.

Als aromatische Polycarbonate C.3 können Homopolycarbonate und Copolycarbonate eingesetzt werden. (vgl. US-PS 2 999 835, GB-PS 777 627 und DE-OS 3 334 872). Besonders bevorzugt sind Bisphenol A-Polycarbonate.

Aromatische Polyestercarbonate C.4 sind überwiegend bis ausschließlich aus aromatischen $C_8$-$C_{14}$-Dicarbonsäuren, $C_6$-$C_{30}$-Diphenolen und Kohlensäurederivaten, z.B. Phosgen, aufgebaut.

Bevorzugte aromatische Dicarbonsäuren sind: Isophthalsäure, Terephthalsäure. Diphenylether-4,4'-dicarbonsäure, Naphthalin-2,6-dicarbonsäure sowie Mischungen dieser Säuren. Besonders bevorzugt sind Iso- und Terephthalsäure. Bevorzugtes Kohlensäurederivat ist Phosgen.

Bevorzugte Diphenole für die Herstellung der aromatischen Polyestercarbonate C.4 sind Verbindungen der Formel (VI),

$$HO - Z - OH \qquad (VI),$$

worin

Z einen zweiwertigen ein- oder mehrkernigen aromatischen Rest mit 6 bis 30 C-Atomen bedeutet und die beiden OH-Gruppen direkt an C-Atome eines aromatischen Rings gebunden sind.

Besonders bevorzugte Diphenole sind Verbindungen der Formel (VII)

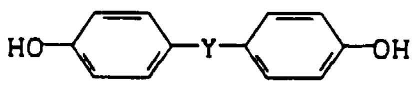

(VII)

in der

Y eine Einfachbindung, einen Alkylen- oder Alkylidenrest mit 1 bis 7 C-Atomen, einen Cycloalkylen- oder Cycloalkylidenrest mit 5 bis 12 C-Atomen,

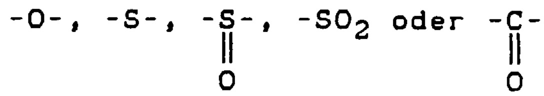

bedeutet

sowie deren kernalkylierte und kernhalogenierte Derivate, z.B.

Hydrochinon,
Resorchin,
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α'-Bis-(hydroxyphenyl)-diisopropylbenzole, sowie deren kernalkylierte und kernhalogenierte Derivate.

Die wichtigsten Diphenole sind:
Bisphenol A, Tetramethylbisphenol A, 1,1-Bis-(4-hydroxyphenyl)-isobutan, 1,1-Bis-(4-hydroxyphenyl)cyclohexan, 4,4'-Dihydroxydiphenylsulfid, 4,4'-Dihydroxydiphenylsulfon sowie deren di- und tetrahalogenierte Derivate. Besonders bevorzugt ist Bisphenol A. Es können auch beliebige Mischungen der genannten Diphenole verwendet werden.

Geeignete Verzweigungsmittel sind in den DE-OS 2 940 024 und 3 007 934 genannt.

Als Kettenabbrecher für die aromatischen Polyestercarbonate C.4 werden vorzugsweise Phenol, $C_1$-$C_{12}$-Alkylphenole, halogenierte Phenole, Hydroxydiphenyl, Naphthole, Chlorkohlensäureester aus diesen Phenolen und Chloride von aromatischen Monocarbonsäuren, die gegebenenfalls mit $C_1$-$C_{22}$-Alkylgruppen und/oder Halogen substituiert sind und die Chloride von aliphatischen Monocarbonsäuren mit bis zu 22 C-Atomen, in Mengen von 0,1 bis 10 Mol-% (im Falle von Phenolen bezogen auf Diphenole, im Falle von Säurechloriden bezogen auf Dicarbonsäuren) verwendet.

In den aromatischen Polyestercarbonaten C.4 können bis jeweils 30 Mol-%, bevorzugt 0 bis 20 Mol-%, der aromatischen Dicarbonsäuren und der aromatischen Dihydroxyverbindungen durch entsprechende aliphatische Verbindungen, z.B. Adipinsäure, Butandiol-1,4, ersetzt sein.

Die aromatischen Polyestercarbonate C.4 können auch aromatische Hydroxycarbonsäuren, wie p-Hydroxybenzoesäure, einkondensiert enthalten. Der Anteil der Hydroxycarbonsäuren kann bis zu 100 Mol-%, bevorzugt 30 bis 50 Mol-%, (bezogen auf Dihydroxyverbindung) betragen.

Die aromatischen Polyestercarbonate C.4 können 1 bis 99 Gew.-% Terephthalsäure, vorzugsweise 25 bis 75 Gew-% und 99-1 Gew.-%, bevorzugt 75-25 Gew.-% Isophthalsäurereste enthalten.

Die aromatischen Polyestercarbonate C.4 können 1 bis 99 Mol-%, insbesondere 30 bis 80 Mol-%, Estergruppen, bezogen auf die Summe von Ester- und Carbonatgruppen, enthalten.

Ester- und Carbonatgruppen können in den aromatischen Polyestercarbonaten C.4 in Blockanordnung oder statistisch verteilt vorliegen.

Die Herstellung der aromatischen Polyestercarbonate C.4 ist bekannt und z.B. in DE-OS 1 495 626, 2 232 877, 2 703 376, 3 000 610, 2 714 544, 2 940 024, 3 007 934 und US-PS 3 169 121 beschrieben.

Die aromatischen Polyestercarbonate C.4 haben relative Lösungsviskositäten $\eta_{rel}$ von 1,18 bis 1,4, vorzugsweise 1,22 bis 1,3 (gemessen an 0,5 g Polyestercarbonat, gelöst in 100 ml $CH_2Cl_2$ bei 25°C).

Ein erfindungsgemäßes thermoplastisches Harz C ist auch ein Gemisch aus 5-95 Gew-%, bevorzugt 50-90 Gew.-% Polyestercarbonat C.4 und 95-5 Gew-%, bevorzugt 10-50 Gew-% Polycarbonat C.3.

Aromatische Polyethersulfone C.5 sind bevorzugt lineare, thermoplastische Polyarylenpolyethersulfone, in welchen die Aryleinheiten über Ether- und Sulfongruppen verbunden sind. Man erhält sie durch Umsetzung eines Akalimetalldoppelsalzes eines zweiwertigen Phenols (Bisphenols) mit einer zwei Halogenatome enthaltenden benzoiden Verbindung, wobei mindestens einer der beiden Reaktanten eine Sulfongruppe ($-SO_2-$) enthalten muß. Polyethersulfone sowie ihre Herstellung sind bekannt (vgl. US-PS 3 264 536, GB-PS 1 264 900, EP-A 0 038 028).

Die erfindungsgemäßen Polyethersulfone C.5 enthalten wiederkehrende Einheiten der Formel (VIII)

$$-O-Z-O-W- \qquad (VIII)$$

worin

Z den Rest eine zweiwertigen Phenols und

W den Rest der benzoiden Verbindung mit einer inerten elektronenanziehenden Gruppe bedeutet und

wobei Z und W durch aromatische Kohlenstoffatome über Valenzbindungen an die Sauerstoffatome gebunden sind und mindestens einer der Reste Z und W eine Sulfongruppe zwischen aromatischen Kohlenstoffatomen besitzt.

Bevorzugte Diphenole für die Herstellung der aromatischen Polyethersulfone C.5 sind die Verbindungen der Formel (III), besonders bevorzugt die Formel (X).

Bevorzugte aromatische Dihalogenverbindungen sind zweikernige Verbindungen der Formel (XI)

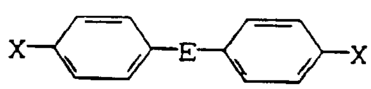 (XI)

Darin bedeuten:

X Halogen (F, Cl, Br, I) und E zweiwertige elektronenanziehende Gruppen, wie Sulfon-, Carbonyl-, Vinyl-, Sulfoxid- oder Azo-Gruppen. Jeder beiden Benzolringe kann mit einem oder mehreren gesättigten Kohlenwasserstoffresten oder elektronenanziehenden Gruppen substituiert sein.

Bevorzugte aromatische Dihalogenverbindungen (XI) sind 4,4'-Dichlordiphenylsulfon und 4,4'-Dichlorbenzophenon.

Die aromatischen Polyethersulfone C.5 können auch verzweigt sein. Geeignete Verzweigungsmittel sind die für die Herstellung von aromatischen Polyestern (DE-OS 2 940 024) und für die Herstellung von aromatischen Polyestercarbonaten (DE-OS 3 007 934) bekannten.

Als Kettenabbrecher bei der Herstellung der aromatischen Polyethersulfone C.5 werden vorzugsweise Phenol, Alkylphenole mit $C_1$-$C_{12}$-Alkylgruppen und halogenierte Phenole sowie Bromide und Chloride von $C_1$-$C_{10}$-Alkanen in Mengen von 0.1 bis 10 Mol -% (im Falle von Phenolen bezogen auf Diphenole, im Falle von Chloriden bezogen auf die aromatischen Dihalogen Verbindungen) verwendet.

Die aromatischen Polyethersulfone C.5 haben reduzierte Viskositäten ($\eta_{red}$) von 0,15 bis 1,5 dl/g, vorzugsweise von 0,35 bis 0,65 dl/g (gemessen an Lösungen von 20 mg Polyethersulfon in 10 ml $CHCl_3$ bei 25°C).

Bei der Herstellung der thermoplastischen Formmassen können weitere, für aromatische Polycarbonate A, Pfropfpolymerisate B oder thermoplastische Harze C bekannte Zusätze, wie Stabilisatoren, Pigmente, Entformungsmittel, Flammschutzmittel und Antistatika, in den üblichen Mengen zugesetzt werden.

Das Verfahren wird bei erhöhten Temperaturen, vorzugsweise bei 200 bis 350°C, in üblichen vorrichtungen, wie Innenknetern, Extrudern oder Doppelwellenschnecken, schmelzcompoundiert oder schmelzextrudiert durchgeführt.

Die Bestandteile können nacheinander oder gleichzeitig gemischt werden.

Die thermoplastischen Formmassen können zur Herstellung von Formkörpern jeder Art z.B. durch Spritzgießen verwendet werden. Beispiele für Formkörper sind: Gehäuseteile (z.B. für Haushaltsgeräte, wie Saftpressen, Kaffeemaschinen, Mixer), Abdeckplatten für das Baugewerbe, Automobilteile. Sie werden außerdem für elektrische Geräte, z.B. für Steckerleisten, eingesetzt, weil sie sehr gute elektrische Eigenschaften haben. Formkörper können auch durch Tiefziehen aus vorher hergestellten Platten oder Folien hergestellt werden.

Beispiele

Polycarbonat A

1.436,4 g (6,3 Mol) Bisphenol-A (2,2-Bis(4-hydroxyphenyl)-propan), 2.387,0 g (7,7 Mol) 1,1-Bis-(4-hydroxyphenyl)-3,3,5-trimethylcyclohexan und 7.476,0 g (84 Mol) 45 %ige NaOH werden in 33,7 l Wasser unter Inertgas gelöst. Dann fügt man eine Lösung von 36,9 g (0,392 Mol) Phenol in 11 l Methylenchlorid und 13 l Chlorbenzol zu. In die gut gerührte Lösung werden bei pH 13 - 14 und 21 - 25°C 2.772 g (28 Mol) Phosgen eingeleitet. Danach werden 14 ml Ethylpiperidin zugegeben und noch 45 Min. gerührt. Die bisphenolatfreie wäßrige Phase wird abgetrennt, die organische Phase nach Ansäuern mit Phosphorsäure mit Wasser elektrolytfrei gewaschen und das Lösungsmittel entfernt. Das erhaltene Polycarbonat besitzt eine relative Lösungsviskosität ($\eta_{rel}$) von 1,30 und eine Glastemperatur Tg von 206°C (DSC).

Pfropfpolymerisat B

B.1

Pfropfpolymerisat von 50 Gew.-Teilen eines Styrol-Acrylnitrilgemisches (Gew.-Verhältnis 72:28) auf 50 Gew.-Teilen eines partiell vernetzten, grobteiligen Polybutadiens mit einem mittleren Teilchendurchmesser von 0,38 µm ($d_{50}$-Wert), einem Gelgehalt von 89 Gew.-% gemäß DE-OS 3 708 913.

Herstellung:

Eine Mischung aus 200 Gew.-Teilen eines 50 Gew.-%igen Latex des Polybutadiens und 149 Gew.-Teilen Wasser werden in einem Reaktor vorgelegt und auf 60 bis 62°C aufgeheizt. Bei dieser Temperatur werden nacheinander in den Reaktor gegeben:

1. Mischung (Emulsion) aus

   0,0836 Gew.-Teilen Cumolhydroperoxid
   6,9600 Gew.-Teilen Wasser
   0,0600 Gew.-Teilen Na-Salz von $C_{14}$-$C_{16}$-Alkylsulfonsäuren

2. Mischung (Lösung) aus

   0,0557 Gew.-Teilen Ascorbinsäure
   6,9600 Gew.-Teilen Wasser

Dann werden innerhalb von 4 Stunden bei einer Innentemperatur von 60 bis 62°C separat und gleichzeitig in den Reaktor unter Rühren eindosiert:

Z 1: 39,05 Gew.-Teilen Wasser
4,00 Gew.-Teilen Na-Salz der disproportionierten Abietinsäure
3,10 Gew.-Teilen 1n-Natronlauge
0,62 Gew.-Teilen Cumolhydroperoxid

Z 2: 72 Gew.-Teilen Styrol
28 Gew-Teilen Acrylnitril

Z 3: 39,8 Gew.-Teilen Wasser
0,105 Gew.-Teilen Ascorbinsäure

Anschließend wird bei 60 bis 62°C 6 Stunden auspolymerisiert. Der Monomerumsatz ist größer als 97 Gew.-%.

Nach der Stabilisierung mit 1,2 Gew-Teilen phenolischem Antioxidanz pro 100 Gew.-Teilen Pfropfpolymerisat wird das Pfropfpolymerisat durch Koagulation mit einer Essigsäure/Magnesiumsulfat-Mischung ausgefällt, gewaschen und zu einem Pulver getrocknet.

Die Pfropfausbeute d.h. das Gewichtsverhältnis von pfropfpolymerisiertem Styrol und Acrylnitril zum gesamten Styrol und Acrylnitril beträgt 89 Gew.-%.

Die Pfropfausbeute wurde bestimmt durch fraktionierende Entmischung mit den entmischenden Flüssigkeiten Dimethylformamid/Methylcyclohexan in der Ultrazentrifuge und durch Ermittlung der Mengen und der chemischen Zusammensetzung der so erhaltenen Fraktionen (s. R. Kuhn, Makromol. Chemie 177, 1525 (1976)).

B.2

Pfropfpolymerisat von 50 Gew.-Teilen eines Styrol-Acrylnitrilgemisches (im Gewichts-Verhältnis 72:28) auf Polybutadien mit einem mittleren Teilchendurchmesser von 0,1 µm ($d_{50}$-Wert) (Herstellung analog B.1).

Thermoplastisches Harz C

C.1 Vinylcopolymerisate

C.1.1

Styrol-Maleinsäureanhydrid-Copolymerisat mit einem Maleinsäureanhydrld-Anteil von 8 % der Fa. Arco Polymers, Inc. (Handelsname: Dylark 232) mit einem L-Wert von 1,7 g/10 min und einem Zahlenmittel des Molekulargewichts von 135.000 g/mol.

C.1.2

Styrol/Acrylnitril-Copolymerisat mit einem Styrol/Acrylnitril-Verhältnis von 72:28 und einer Grenzviskosität von (η) = 0,55 dl/g (Messung in Dimethylformamid bei 20°C).

C.2 Polyalkylenterephthalat

Lineares Polyethylenterephthalat mit einer Intrinsic-Viskosität I.V. = 0,85 dl/g, gemessen in Phenol/o-Dichlorbenzol (1:1) bei 25°C und einer Konzentration von 0,5 g/dl.

C.3 Aromatisches Polycarbonat

Lineares Polycarbonat auf Basis Bisphenol A mit einer relativen Lösungsviskosität $\eta_{rel}$ von 1,26 bis 1,28, gemessen in $CH_2Cl_2$ bei 25°C und einer Konzentration von 0,5 g/ml.

C.4 Aromatische Polyestercarbonate

Polyestercarbonat mit einem Esteranteil von 50 Mol-% auf Basis Bisphenol A, Iso- und Terephthalsäure (1:1) mit 3 Mol-%, bezogen auf Bisphenol A-Einheiten, p-Isooctylphenyl-Endgruppen mit einer relativen Lösungsviskosität $\eta_{rel}$ von 1,30 (gemessen an einer Lösung von 0,5 g Polyestercarbonat in 100 ml $CH_2Cl_2$ bei 25°C).

C.5 Aromatisches Polyethersulfon

1.141,7 Teile Bis-2,2(4-hydroxyphenyl)-propan und 1.435,8 Gew.-Teile Bis-(4-Chlor-phenyl)-sulfon werden unter Stickstoff in 4.500 Gew.-Teilen N-Methylpyrrolidon und 970 Gew.-Teilen Chlorbenzol gelöst und mit 760 Gew.-Teilen wassserfreiem Kaliumcarbonat versetzt. Das Reaktionsgemisch wird innerhalb 30 Minuten auf 180°C erhitzt und dort für 5 Stunden gehalten, wobei ein Gemisch aus Wasser und Chlorbenzol abdestilliert. Innerhalb weiterer 4 Stunden wird das Chlorbenzol abdestilliert. Nach einer Reaktionszeit von 6 Stunden wird das Reaktionsgemisch auf 60-70°C abgekühlt, das Polymere in Methanol ausgefällt, mit Wasser gewaschen und im Vakuum getrocknet. Das Produkt besitzt eine reduzierte Viskosität von $\eta_{red}$ = 0,52 dl/g ($CHCl_3$ bei 25°C).

Herstellung und Prüfung der erfindungsgemäßen Formmassen

Polycarbonat A, Pfropfpolymerisat B und gegebenenfalls thermoplastisches Harz C werden auf einem 1,3 l-Innenkneter bei Temperaturen zwischen 250 und 320°C aufgeschmolzen und homogenisiert.

Von den Formmassen wurde auf einer Spritzgußmaschine Stäbe der Abmessung 80 x 10 x 4 mm (Verarbeitungstemperatur: 280°C) hergestellt, an denen die Kerbschlagzähigkeit (nach Methode ISO 180) bei Zimmertemperatur gemessen wurde.

Das Spannungsrißverhalten (ESC-Verhalten) wurde an Stäben der Abmessung 80 x 10 x 4 mm, Massetemperatur 280°C, gemäß DIN 53 449/3 untersucht. Als Kraftstoffsimulanz wurde eine Mischung aus 50 % Toluol und 50 % Isooctan

verwendet. Die Probekörper wurden mittels einer Kreisbogenschablone vorgedehnt und 5 Minuten (bzw. 10 Minuten) bei 23°C im Kraftstoffsimulanz gelagert. Die Vordehnung $\varepsilon_x$ betrug 0,4 bis 2,4 %. Das Spannungsrißverhalten wurde über die Rißbildung bzw. den Bruch in Abhängigkeit der Vordehnung beurteilt.

Wie aus Tabelle 1 deutlich wird, weisen die erfindungsgemäßen Beispiele 2-5 gegenüber dem Vergleichsbeispiel 1 ein 2-3faches Kerbschlagzähigkeitsniveau auf. Dieser Effekt ist im Verhältnis zum Ausgangsniveau wesentlich ausgeprägter als beim bekannten Bisphenol-A-Polycarbonat.

Überraschenderweise zeigte sich außerdem, daß Mischungen des Polycarbonats A mit dem Pfropfpolymerisat B. 2 (mittlerer Teilchendurchmesser 0,1 µm) ein wesentlich verbessertes ESC-Verhalten besitzen (Beispiele 4-5), das durch Pfropfpolymerisate, die nach dem herkömmlichen Verfahren hergestellt worden sind, nicht erreicht wird.

Die hohen Kerbschlagzähigkeiten der erfindungsgemäßen Formmassen bleiben auch dann erhalten, wenn andere Thermoplaste (Komponente C) zugemischt werden (Tabellen 2-4).

Tabelle 1:

| Formmassen aus binären Mischungen der Komponenten A und B | | | | | |
|---|---|---|---|---|---|
| Beispiel | Komponenten | | | Kerbschlagzähigkeit $a_k$ bei RT[kJ/m$^2$] | ESC-Verhalten Bruch bei $E_x$[%] |
| | A | B.1 | B.2 | | |
| | [Gew.-%] | | | | |
| 1 (Vergleich) | 100 | - | - | 10 | 0,4 |
| 2 | 80 | 20 | - | 25 | 0,4 |
| 3 | 70 | 30 | - | 30 | 0,4 |
| 4 | 80 | - | 20 | 27 | 0,6 |
| 5 | 70 | - | 30 | 28 | 2,4 |

Tabelle 2

Formmassen aus ternären Mischungen der Komponenten A, B und C

| Beispiel | Komponenten A | B.2 | C.1.1 | C.1.2 | C.2 | C.4 | C.5 | Kerbschlagzähigkeit $a_K$ bei RT |
|---|---|---|---|---|---|---|---|---|
| | [Gew.-%] | | | | | | | [kJ/m²] |
| 6 | 50 | 30 | 20 | - | - | - | - | 29 |
| 7 | 50 | 30 | - | 20 | - | - | - | 38 |
| 8 | 50 | 30 | - | - | 20 | - | - | 36 |
| 9 | 50 | 30 | - | - | - | 20 | - | 30 |
| 10 | 50 | 30 | - | - | - | - | 20 | 20 |

Tabelle 3

| Formmassen aus ternären Mischungen der Komponenten A, B und C mit Bisphenol-A-Polycarbonat als Komponente C | | | | |
|---|---|---|---|---|
| Beispiel | Komponenten | | | Kerbschlagzähigkeit $a_k$ bei RT |
| | A | B.2 | C.3 | [kJ/m$^2$] |
| 11 | 20 | 20 | 60 | 45 |
| 12 | 40 | 20 | 40 | 41 |
| 13 | 60 | 20 | 20 | 35 |

Tabelle 4

| Formmassen mit zwei verschiedenen Komponenten C | | | | | |
|---|---|---|---|---|---|
| Beispiel | Komponenten | | | | Kerbschlagzähigkeit $a_k$ bei RT |
| | A | B.1 | C.3 | C.1.2 | [kJ/m$^2$] |
| | [Gew.-%] | | | | |
| 14 | 5 | 24 | 55 | 16 | 35 |
| 15 | 10 | 24 | 50 | 16 | 35 |
| 16 | 20 | 24 | 40 | 16 | 32 |

**Patentansprüche**

**1.** Verfahren zur Herstellung von thermoplastischen Formmassen wobei man ein Pfropfpolymerisat B aus

B.1 5 bis 90 Gew.-Teilen einer Mischung aus

B.1.1 50 bis 98 Gew.-Teilen Styrol, α-Methylstyrol, $C_1$-$C_4$-Alkyl- oder Halogen-kernsubstituierten Styrolen, $C_1$-$C_8$-Alkylmethacrylaten, $C_1$-$C_8$-Alkylacrylaten oder Mischungen daraus und

B.1.2 5 bis 50 Gew.-Teilen Acrylnitril, Methacrylnitril, $C_1$-$C_8$-Alkylmethacrylaten; $C_1$-$C_8$-Alkylacrylaten, Maleinsäureanhydrid, $C_1$-$C_4$-Alkyl-N-Maleinimiden, Phenyl-N-Maleinimiden oder Mischungen daraus, auf

B.2 10 bis 95 Gew.-Teilen eines Dienkautschuks mit einem mittleren Teilchendurchmesser $d_{50}$ von 0,09 bis 1 um und einem Gelaehalt von mehr als 50 Gew.-%, mittels eines Initiatorsystems aus Cumolhydroperoxid oder tert.-Butylhydroperoxid und Ascorbinsäure herstellt und anschließend

2 bis 60 Gew.-% Pfropfpolymerisat B mit

A. 40 bis 98 Gew.-% (bezogen auf A + B) eines Polycarbonats. das die bifunktionelle Struktureinheit der Formel (I) enthält,

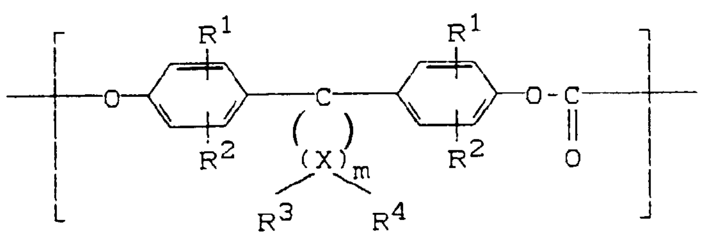 (I)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes X individuell wählbar, unabhängig voneinander Wasserstoff oder $C_1$-$C_6$-Alkyl

und

X Kohlenstoff bedeuten,
mit der Maßgabe, daß an mindestens einem Atom X $R^3$ und $R^4$ aleichzeitia Alkyl bedeuten, und

C. gegebenenfalls mindestens einem weiterem thermoplastischen Harz, welches bis zu 75 Gew.-%, des Polycarbonats A ersetzt, vermischt.

**2.** Verfahren gemäß Anspruch 1, worin das Pfropfpolymerisat B durch Polymerisation der Monomeren B.1 in wäßriger Emulsion in Gegenwart einer Emulsion des Kautschuks B.2 bei Temperaturen von 40°C bis 70°C mit 0,3 bis 1,5 Gew.-Teilen Hydroperoxid und 0,1 bis 1 Gew.-Teilen Ascorbinsäure, jeweils bezogen auf 100 Gew.-Teile Monomere B.1, als Initiator hergestellt worden ist, wobei das Gewichtsverhältnis Hydroperoxid: Ascorbinsäure 0,3 bis 15 ist.

**3.** Verfahren gemäß Anspruch 1, worin das thermoplastische Harz C ein Vinyl-Copolymerisat aus

50 bis 98 Gew.-Teilen Styrol, α-Methylstyrol, kernsubstituierten Styrolen, Methylmethacrylat oder Mischungen daraus und

50 bis 2 Gew.-Teilen Acrylnitril, Methacrylnitril, Methylmethacrylat, Maleinsäureanhydrid, N-substituierten Maleinimiden und Mischungen daraus ist.

**4.** Verfahren gemäß Anspruch 1, worin das thermoplastische Harz C ein Polyalklylenterephthalat auf Basis aromatischer Dicarbonsäuren und aliphatischer, cycloaliphatischer oder arylaliphatischer Diole ist.

**5.** Verfahren gemäß Anspruch 1, worin das thermoplastische Harz C ein von A verschiedenes aromatisches Polycarbonat ist.

**6.** Verfahren gemäß Anspruch 1, worin das thermoplastische Harz C ein Polyestercarbonat auf Basis von $C_6$-$C_{13}$-Diphenolen, aromatischen $C_8$-$C_{14}$-Dicarbonsäuren und Kohlensäurenderivaten ist.

**7.** Verfahren gemäß Anspruch 1, worin das thermoplastische Harz C ein aromatisches Polyethersulfon ist mit wiederkehrenden Einheiten der Formel (VIII)

$$-O-Z-O-W- \qquad (VIII)$$

worin

Z den Rest eines zweiwertigen Phenols und

W den Rest einer benzoiden Verbindung mit einer inerten, elektronenanziehenden Gruppe bedeuten.

**Claims**

**1.** Process for preparing thermoplastic moulding compositions wherein a graft polymer B is prepared from

B.1 5 to 90 parts by weight of a mixture of

B.1.1 50 to 98 parts by weight styrene, α-methylstyrene, $C_1$-$C_4$ alkyl- or halogen-nucleus-substituted styrenes,

$C_1$-$C_8$ alkyl methacrylates, $C_1$-$C_8$ alkyl acrylates or mixtures thereof and

B.1.2 5 to 50 parts by weight acrylonitrile, methacrylonitrile, $C_1$-$C_8$ alkyl methacrylates, $C_1$-$C_8$ alkyl acrylates, maleic anhydride, $C_1$-$C_4$ alkyl-N-maleic imides, phenyl-N-maleic imides or mixtures thereof on

B.2 10 to 95 parts by weight of a diene rubber having an average particle diameter $d_{50}$ of from 0.09 to 1 μm and a gel content of more than 50 wt.%, by means of an initiator system of cumene hydroperoxide or tert. butyl hydroperoxide and ascorbic acid and then

2 to 60 wt.% graft polymer B is blended with

A. 40 to 98 wt.% (based on A + B) of a polycarbonate which contains the bifunctional structural unit corresponding to formula (I)

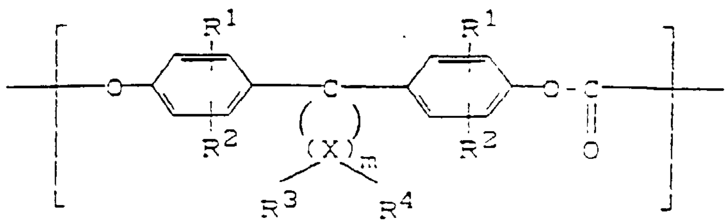 (I)

in which

R¹ and R² independently of one another represent hydrogen, halogen, preferably chlorine or bromine, $C_1$-$C_8$ alkyl, $C_5$-$C_6$ cycloalkyl, $C_6$-$C_{10}$ aryl, preferably phenyl, and $C_7$-$C_{12}$ aralkyl, preferably phenyl-$C_1$-$C_4$-alkyl, more especially benzyl,

m is an integer from 4 to 7, preferably 4 or 5,

$R^3$ and $R^4$ may be selected individually for each X and independently of one another represent hydrogen or $C_1$-$C_4$ alkyl

and

X represents carbon,
with the proviso that, for at least one atom X, $R^3$ and $R^4$ are both alkyl, and

C. optionally at least one other thermoplastic resin, which replaces up to 75 wt.% of the polycarbonate A.

**2.** Process according to claim 1 in which the graft polymer B has been prepared by polymerisation of the monomers B.1 in aqueous emulsion in the presence of an emulsion of the rubber B.2 at temperatures of 40°C to 70°C with 0.3 to 1.5 parts by weight hydroperoxide and 0.1 to 1 part by weight ascorbic acid, based on 100 parts by weight monomers B.1, as initiator, the ratio by weight of hydroperoxide to ascorbic acid being from 0.3 to 15.

**3.** Process according to claim 1 in which the thermoplastic resin C is a vinyl copolymer of

50 to 98 parts by weight styrene, α-methylstyrene, nucleus-substituted styrenes, methyl methacrylate or mixtures thereof and

50 to 2 parts by weight acrylonitrile, methacrylonitrile, methyl methacrylate, maleic anhydride, N-substituted maleic imides and mixtures thereof.

**4.** Process according to claim 1 in which the thermoplastic resin C is a polyalkylene terephthalate based on aromatic dicarboxylic acids and aliphatic, cycloaliphatic or aryl aliphatic diols.

**5.** Process according to claim 1 in which the thermoplastic resin C is an aromatic polycarbonate different from A.

**6.** Process according to claim 1 in which the thermoplastic resin C is a polyester carbonate based on $C_6$-$C_{13}$ diphenols, aromatic $C_8$-C-$_{14}$ dicarboxylic acids and carbonic acid derivatives.

**7.** Process according to claim 1 in which the thermoplastic resin C is an aromatic polyether sulphone with recurring units corresponding to formula (VIII)

$$-O-Z-O-W- \qquad (VIII)$$

in which

z is the residue of a dihydric phenol and

w is the residue of a benzoid compound with an inert, electron-attracting group.

**Revendications**

**1.** Procédé pour la préparation de matières à mouler thermoplastiques dans lequel on prépare un copolymère greffé B de

B.1 5 à 90 parties en poids d'un mélange de

B.1.1 50 à 98 parties en poids de styrène, d'α-méthylstyrène, de styrènes substitués dans le noyau par des groupes alkyles en $C_1$-$C_4$ ou des halogènes, de méthacrylates d'alkyle en $C_1$-$C_8$, d'acrylates d'alkyle en $C_1$-$C_8$ ou leurs mélanges et

B.1.2 5 à 50 parties en poids d'acrylonitrile, de méthacrylonitrile, de méthacrylates d'alkyle en $C_1$-$C_8$, d'acrylates d'alkyle en $C_1$-$C_8$, d'anhydride maléique, de N-(alkyle en $C_1$-$C_4$)maléimides, de N-phénylmaléimides ou leurs mélanges, sur

B.2 10 à 95 parties en poids d'un caoutchouc diénique ayant un diamètre de particule moyen $d_{50}$ de 0,09 à 1µm et une teneur en gel supérieure à 50 % en poids,
à l'aide d'un système inducteur consistant en hydroperoxyde de cumène ou hydroperoxyde de tert-butyle et acide ascorbique,

puis on mélange
2 à 60 % en poids du polymère greffé B avec

A 40 à 98 % en poids (par rapport à A + B) d'un polycarbonate contenant le motif de structure bifonctionnel de formule (I)

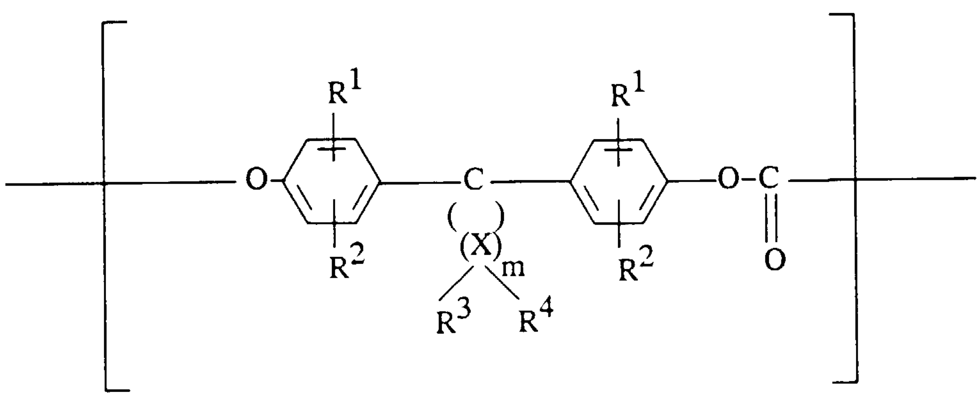

(I)

dans laquelle

$R^1$ et $R^2$ représentent chacun, indépendamment l'un de l'autre, l'hydrogène, un halogène, de préférence le chlore ou le brome, un groupe alkyle en $C_1$-$C_8$, cycloalkyle en $C_5$-$C_6$, aryle en $C_6$-$C_{10}$, de préférence phényle, ou aralkyle en $C_7$-$C_{12}$, de préférence phényl-alkyle en $C_1$-$C_4$, plus spécialement benzyle,

m est un nombre entier allant de 4 à 7, de préférence égal à 4 ou 5,

$R^3$ et $R^4$, qui peuvent être choisis indépendamment pour chacun des atomes X, représentent chacun, indépendamment l'un de l'autre, l'hydrogène ou un groupe alkyle en $C_1$-$C_6$, et

x représente le carbone,

sous réserve que, sur au moins un atome X, $R^3$ et $R^4$ représentent tous deux des groupes alkyle, et

C le cas échéant au moins une autre résine thermoplastique qui remplace jusqu'à 75 % en poids du polycarbonate A.

**2.** Procédé selon la revendication 1, dans lequel le polymère greffé B a été préparé par polymérisation des monomères B.1 en émulsion aqueuse en présence d'une émulsion du caoutchouc B.2 à des températures de 40 à 70°C avec 0,3 à 1,5 partie en poids d'hydroperoxyde et 0,1 à 1 partie en poids d'acide ascorbique dans les deux cas pour 100 parties en poids des monomères B.1, en tant qu'inducteurs, avec un rapport en poids hydroperoxyde/acide ascorbique allant de 0,3 à 15.

**3.** Procédé selon la revendication 1, dans lequel la résine thermoplastique C est un copolymère vinylique de

50 à 98 parties en poids de styrène, d'α-méthylstyrène, de styrènes substitués dans les noyaux, de méthacrylate de méthyle ou leurs mélanges et

50 à 2 parties en poids d'acrylonitrile, de méthacrylonitrile, de méthacrylate de méthyle, d'anhydride maléique, de maléimides substitués à l'azote et leurs mélanges.

**4.** Procédé selon la revendication 1, dans lequel la résine thermoplastique C est un téréphtalate de polyalkylène à base d'acides dicarboxyliques aromatiques et de diols aliphatiques, cycloaliphatiques ou arylaliphatiques.

**5.** Procédé selon la revendication 1, dans lequel la résine thermoplastique C est un polycarbonate aromatique différent du composant A.

**6.** Procédé selon la revendication 1, dans lequel la résine thermoplastique C est un polyestercarbonate à base de diphénols en $C_6$-$C_{13}$, d'acides dicarboxyliques aromatiques en $C_8$-$C_{14}$ et de dérivés de l'acide carbonique.

**7.** Procédé selon la revendication 1, dans lequel la résine thermoplastique C est une polyéthersulfone aromatique à motifs répétés de formule (VIII)

$$-O-Z-O-W \qquad (VIII)$$

dans laquelle

Z est le radical d'un phénol divalent et

W est le radical d'un composé benzoïde contenant un groupe électrophile inerte